# EUROPEAN PATENT APPLICATION

(11) **EP 4 737 283 A1**
(43) Date of publication of application: **06.05.2026**
(21) Application number: 25197634.6
(22) Date of filing: 22.08.2025
(51) Int. Cl.: B62J 41/00, B60T 8/36, B62L 1/00, B62J 11/16, B62K 11/04, B62K 19/38, B62L 3/02, B62M 7/02

(54) **SADDLE-TYPE VEHICLE**

(30) Priority: 29.10.2024 JP 2024189470
(71) Applicant: Suzuki Motor Corporation, Shizuoka 432-8611 (JP)
(72) Inventor: KANAMORI, Toshiharu, Hamamatsu-shi (JP)
(74) Representative: Haseltine Lake Kempner LLP

(57) **Abstract**

A saddle-type vehicle (1) includes: a hydraulic unit (71, 83) configured to receive an operating force and adjust a brake fluid pressure; a heat exchanger (65, 82) configured to dissipate heat of cooling water or engine oil to the outside; and a vehicle body frame (10) configured to support the hydraulic unit and the heat exchanger. The hydraulic unit is located above the heat exchanger, and at least a part of the hydraulic unit overlaps with the heat exchanger in a top view.

## Description

### TECHNICAL FIELD

The present invention relates to a saddle-type vehicle.

### BACKGROUND ART

A saddle-type vehicle equipped with an anti-lock braking system (ABS) device that prevents a front wheel from locking during sudden braking is known (see, for example, Patent Literature 1). In the saddle-type vehicle described in Patent Literature 1, a pair of main frames extend rearward from a head pipe while spreading outwardly to the right and left, and the pair of main frames are covered from outer sides in a vehicle width direction by a front cowl. The ABS device is supported on the main frame on the right side via a stay, and is installed in a space between the main frame on the right side and the front cowl.

### CITATION LIST

### PATENT LITERATURE

Patent Literature 1: JP4680162B

In the saddle-type vehicle described in Patent Literature 1, the ABS device is positioned on the outside of the main frame in the vehicle width direction, and an external impact to the ABS device when the vehicle rolls over is mitigated by a protective frame. However, when the protective frame is provided on the outside of the main frame, there is a problem in that the space between the main frame and the front cowl becomes larger, resulting in an increase in size of a vehicle body. Similar problems can also occur in hydraulic units other than the ABS device.

### SUMMARY

The present invention is made in consideration of the above-described point, and has an object to provide a saddle-type vehicle in which a hydraulic unit can be installed compactly at a front portion of a vehicle, thereby preventing the vehicle from becoming large.

A saddle-type vehicle according to an aspect of the present invention includes: a hydraulic unit configured to receive an operating force and adjust a brake fluid pressure; a heat exchanger configured to dissipate heat of cooling water or engine oil to the outside; and a vehicle body frame configured to support the hydraulic unit and the heat exchanger, where the hydraulic unit is located above the heat exchanger, and at least a part of the hydraulic unit overlaps with the heat exchanger in a top view, thereby solving the above-described problem.

According to the saddle-type vehicle according to the aspect of the present invention, the hydraulic unit is overlapped on the heat exchanger, so that the hydraulic unit is shifted inward in a vehicle width direction, thereby suppressing an increase in vehicle width dimension. In addition, by positioning the hydraulic unit above the heat exchanger, hot air passing through the heat exchanger is less likely to hit the hydraulic unit, minimizing the effect of heat on the hydraulic unit.

### BRIEF DESCRIPTION OF DRAWINGS

FIG. 1 is a left side view of a saddle-type vehicle according to an example.
FIG. 2 is a left side view of a periphery of an engine according to the example.
FIG. 3 is a front view of the periphery of the engine according to the example.
FIG. 4 is a top view of the periphery of the engine according to the example.
FIG. 5 is a front view of a periphery of an engine according to a modification example.

### DESCRIPTION OF EMBODIMENTS

In a saddle-type vehicle according to an aspect of the present invention, a hydraulic unit and a heat exchanger are supported by a vehicle body frame. In the hydraulic unit, a brake fluid pressure is adjusted in response to an operating force, and in the heat exchanger, heat of cooling water or engine oil is dissipated to the outside. The hydraulic unit is located above the heat exchanger, and at least a part of the hydraulic unit overlaps with the heat exchanger in a top view. The hydraulic unit is overlapped on the heat exchanger, so that the hydraulic unit is shifted inward in a vehicle width direction, thereby suppressing an increase in vehicle width dimension. In addition, by positioning the hydraulic unit above the heat exchanger, hot air passing through the heat exchanger is less likely to hit the hydraulic unit, minimizing the effect of heat on the hydraulic unit.

### Examples

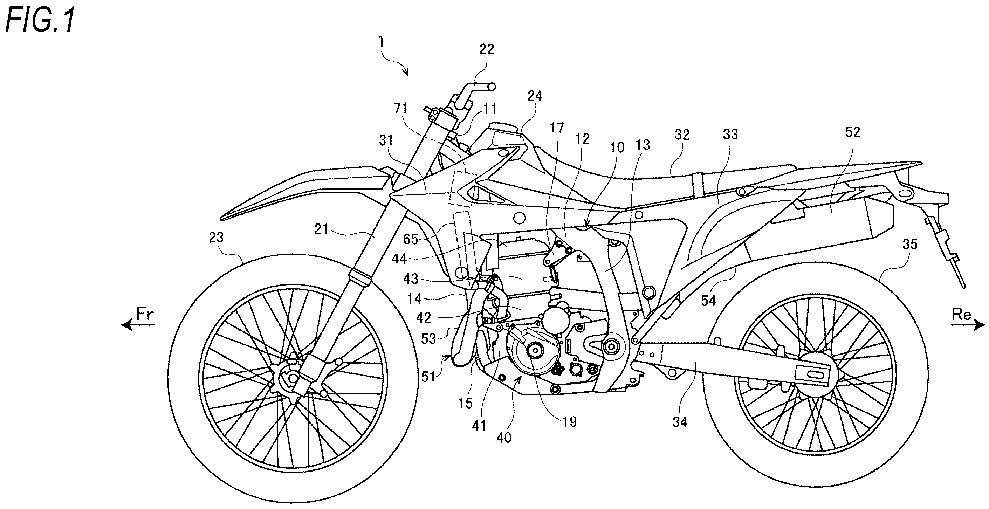

Hereinafter, a saddle-type vehicle according to this example will be described with reference to the accompanying drawings. FIG. 1 is a left side view of the saddle-type vehicle according to the example. In the following drawings, an arrow Fr indicates the front of the vehicle, an arrow Re indicates the rear of the vehicle, an arrow L indicates the left side of the vehicle, and an arrow R indicates the right side of the vehicle.

As illustrated in FIG. 1, a saddle-type vehicle 1 is configured by mounting an engine 40, an electrical system, and various other components on a vehicle body frame 10. A pair of main frames 12 extend diagonally downward and rearward from a head pipe 11 of the vehicle body frame 10 on the right and left sides, and a pair of body frames 13 extend downward from rear portions of the pair of main frames 12. A down frame 14 extends downward from the head pipe 11, and an underloop 15 bent rearward is connected to a lower portion of the down frame 14. A rear end of the underloop 15 is connected to a lower portion of the pair of body frames 13, so that the vehicle body frame 10 is formed into a cradle shape.

A front fork 21 is supported on the head pipe 11 via a steering shaft (not illustrated) so as to be steerable. A handlebar 22 is provided on an upper portion of the front fork 21, and a front wheel 23 is rotatably supported on a lower portion of the front fork 21. A fuel tank 24 is placed on an upper portion of the pair of main frames 12, and the main frames 12 and the fuel tank 24 are covered from sides by front side covers 31. A seat 32 is provided behind the fuel tank 24, and a seat frame (not illustrated) that supports the seat 32 from below is covered from sides by rear side covers 33.

A swing arm 34 is supported by the body frame 13 so as to be able to swing. The swing arm 34 extends rearward from the body frame 13, and a rear wheel 35 is rotatably supported at a rear end of the swing arm 34. The engine 40 is a four-stroke single cylinder engine, and is suspended inside the vehicle body frame 10 via a plurality of suspension brackets 17, 19. A cylinder assembly, in which a cylinder 42, a cylinder head 43, and a cylinder head cover 44 are stacked, is attached to an upper surface of a crankcase 41 of the engine 40. An air cleaner (not illustrated) is provided behind the cylinder head 43.

An exhaust pipe 51 extends downward from a front left side of the cylinder head 43, passes through a right side of the cylinder 42, and is connected to a muffler 52 at the rear of the vehicle. A primary catalyst case 53 is provided in the exhaust pipe 51 in front of the engine 40, and a secondary catalyst case 54 is provided in the exhaust pipe 51 in the rear of the engine 40. Right and left radiators 61, 65 (only the left radiator 65 is illustrated in FIG. 1) are located in front of the cylinder head 43, and the right and left radiators 61, 65 are attached to the down frame 14. Further, an ABS device 71 serving as a hydraulic unit is provided inside the front side cover 31.

In the vehicle body frame 10 described above, the pair of main frames 12 extend laterally rearward from the head pipe 11, and the pair of main frames 12 are covered from outer sides in a vehicle width direction by the pair of front side covers 31. When the ABS device 71 is installed between the main frame 12 and the front side cover 31, the front side cover 31 bulges outward in the vehicle width direction, resulting in an increase in size of a vehicle body. In addition, hot air from the right and left radiators 61, 65 may adversely affect the ABS device 71. Therefore, in this example, the ABS device 71 is arranged such that the ABS device 71 overlaps with the left radiator 65 from above, thereby suppressing the bulge of the front side cover 31 and avoiding hot air.

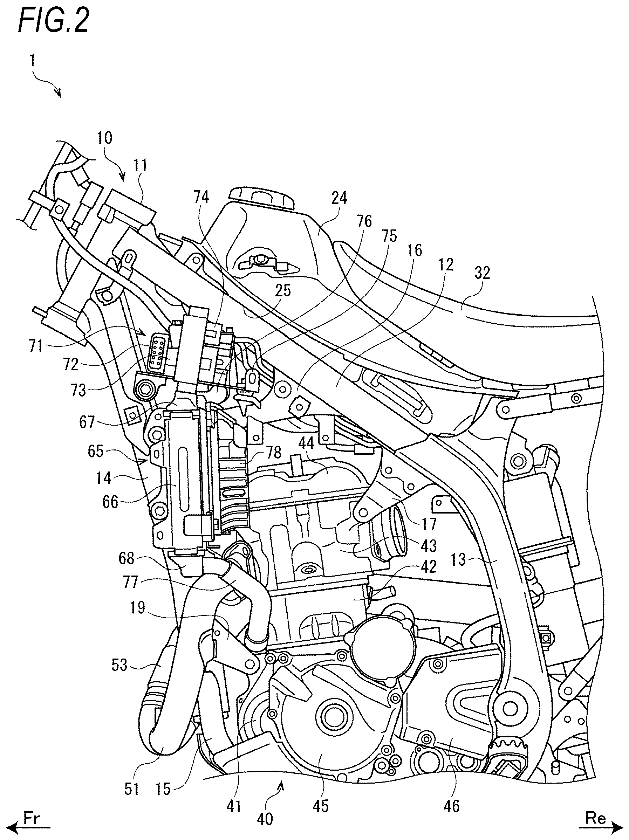

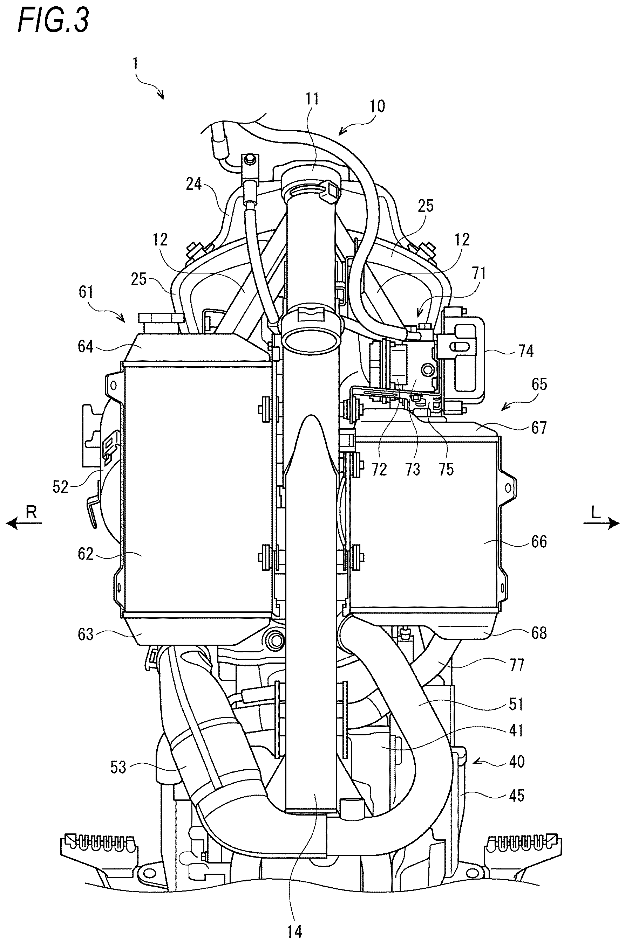

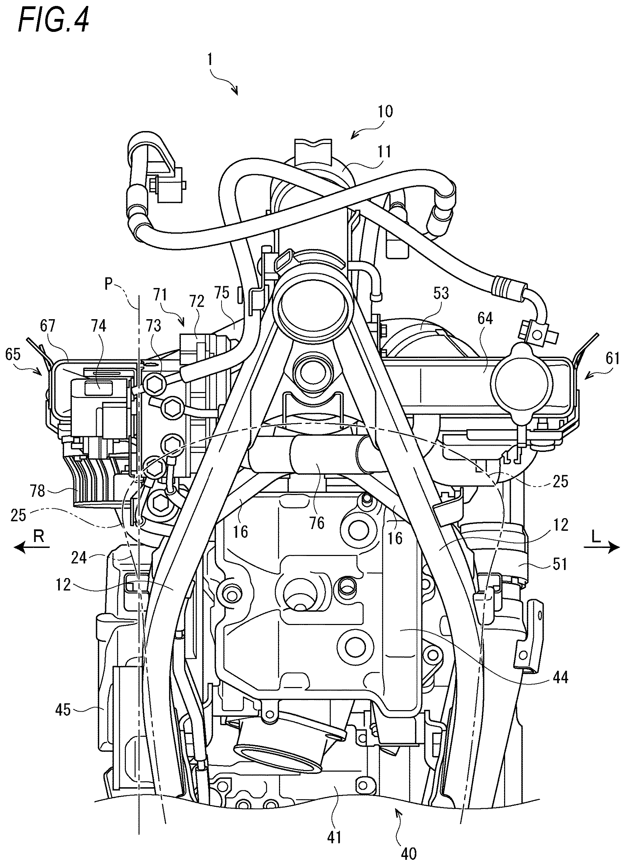

A layout of the ABS device will be described with reference to FIGS. 2 to 4. FIG. 2 is a left side view of a periphery of the engine according to the example. FIG. 3 is a front view of the periphery of the engine according to the example. FIG. 4 is a top view of the periphery of the engine according to the example. FIGS. 2 to 4 illustrate a state in which the front side covers are removed. In FIG. 4, the fuel tank is indicated by a two-dot chain line.

As illustrated in FIG. 2, at an upper portion of the vehicle body frame 10, the pair of main frames 12 extend diagonally downward and rearward from an upper rear side of the head pipe 11, and a single down frame 14 extends downward from a lower rear side of the head pipe 11. Intermediate portions of the pair of main frames 12 and an intermediate portion of the down frame 14 are connected via a pair of bridges 16 for reinforcement. The fuel tank 24 is supported by the pair of main frames 12, and a lower half of the fuel tank 24 is located inside of the pair of main frames 12. The inside of the pair of main frames 12 is utilized as an installation space for the fuel tank 24, ensuring a sufficient tank capacity for the fuel tank 24.

Below the bridge 16, the engine 40 is suspended from the vehicle body frame 10 by the suspension brackets 17, 19. The cylinder 42 is provided on the upper surface of the crankcase 41 of the engine 40, the cylinder head 43 is provided on an upper surface of the cylinder 42, and the cylinder head cover 44 is provided on an upper surface of the cylinder head 43. A magneto cover 45 and a sprocket cover 46 are provided on a left side of the crankcase 41. The exhaust pipe 51 extends diagonally downward to the left from a front surface of the cylinder head 43, and after crossing the front of the down frame 14, the exhaust pipe 51 passes along the right side of the cylinder 42 and extends rearward.

As illustrated in FIGS. 2 and 3, the right radiator 61 and the left radiator 65 having upper surfaces at different heights are supported on the right and left sides of the down frame 14 forward of the cylinder head cover 44. A height dimension of the left radiator 65 is smaller than a height dimension of the right radiator 61, and an upper surface of the left radiator 65 is lower than an upper surface of the right radiator 61. A lower surface of the left radiator 65 is located below the cylinder head cover 44, but the upper surface of the left radiator 65 is located above the cylinder head cover 44. In addition, a radiator fan 78 is attached to a rear surface of the left radiator 65.

In the right radiator 61, a right inlet tank 63 is provided below a right radiator core 62, and a right outlet tank 64 is provided above the right radiator core 62. In the left radiator 65, a left inlet tank 67 is provided above a left radiator core 66, and a left outlet tank 68 is provided below the left radiator core 66. An inlet hose (not illustrated) extends from the engine 40 to the right inlet tank 63, the right outlet tank 64 and the left inlet tank 67 are connected by a radiator hose 76, and an outlet hose 77 extends from the left outlet tank 68 to a water pump (not illustrated).

In the right radiator 61, cooling water flows upward from the right inlet tank 63 to the right outlet tank 64, and heat of the cooling water is dissipated to the outside while the cooling water passes through the right radiator core 62. Cooling water is sent from the right outlet tank 64 through the radiator hose 76 to the left inlet tank 67. In the left radiator 65, cooling water flows downward from the left inlet tank 67 to the left outlet tank 68, and heat of the cooling water is dissipated to the outside while the cooling water passes through the left radiator core 66. The right radiator 61 and the left radiator 65 dissipate heat from the cooling water in two stages, improving the cooling efficiency.

The ABS device 71 is supported on a left side of the down frame 14 above the left radiator 65. The ABS device 71 adjusts a brake fluid pressure in response to an operating force so as to prevent the front wheel 23 (see FIG. 1) from locking when the front wheel 23 is suddenly braked. The ABS device 71 is composed of an ABS controller 72 and an actuator 73, with the ABS controller 72 positioned on the inside in the vehicle width direction and the actuator 73 positioned on the outside in the vehicle width direction. Signals are input to the ABS controller 72 from various sensors in various parts of the vehicle body, and the brake fluid pressure is adjusted by the actuator 73 in response to instructions from the ABS controller 72.

Of the right radiator 61 and the left radiator 65, the ABS device 71 is located above the left radiator 65 which has the lower upper surface. The heights of the lower surfaces of the right radiator 61 and the left radiator 65 are substantially the same, and a vertical dimension of the left radiator 65 is smaller than that of the right radiator 61 by a height dimension of the ABS device 71. The upper surface of the left radiator 65 is lower than the upper surface of the right radiator 61, so that an installation space for the ABS device 71 is secured above the left radiator 65. The ABS device 71 is installed without modifying the design of the right radiator 61, so that changes in vehicle characteristics are reduced and the vehicle body can be designed compactly.

A relay component 74 is located on an outer side of the ABS device 71 in the vehicle width direction, and the ABS device 71 and the relay component 74 are supported by the down frame 14 and the bridge 16 via a bracket 75. By providing the relay component 74 beside the ABS device 71, the space above the left radiator 65 can be utilized more effectively. Furthermore, the bracket 75 is used for both the ABS device 71 and the relay component 74, thereby reducing the number of parts and making the vehicle body lighter. By positioning the ABS device 71 and the relay component 74 above the left radiator 65, the hot air passing through the left radiator 65 is less likely to hit the ABS device 71 and the relay component 74, thereby minimizing effects of heat.

As illustrated in FIGS. 2 and 4, at least a part of the ABS device 71 overlaps with the left radiator 65 in a top view. More specifically, at least a part (front portion) of the ABS device 71 is located forward of a rear surface of the left radiator core 66 (see FIG. 3), and a rear end of the ABS device 71 is located forward of a rear end of the radiator fan 78. At least a part of the ABS device 71 overlaps with the main frame 12 on the left side in a top view. By overlapping the ABS device 71 with the left radiator 65 and the main frame 12, the ABS device 71 is located inward in the vehicle width direction, and the degree to which the front side cover 31 (see FIG. 1) bulges outward in the vehicle width direction is reduced.

The pair of main frames 12 extend rearward from the head pipe 11 while spreading out laterally. The ABS device 71 and at least a part of the left radiator 65 are located below the pair of main frames 12 and inward in the vehicle width direction from a position P where the pair of main frames 12 have a maximum width. Below the left radiator 65, the exhaust pipe 51 extends from the engine 40 downward and outward in the vehicle width direction, and by positioning the ABS device 71 inward in the vehicle width direction, the ABS device 71 is separated from the exhaust pipe 51, thereby reducing the effect of heat from the exhaust pipe 51 on the ABS device 71. In addition, since the ABS device 71 is located close to a roll axis of the vehicle body, the impact on driving stability is small.

In a side view, a lower surface of a front corner portion 25 of the fuel tank 24 is formed along the pair of main frames 12, and the front corner portion 25 of the fuel tank 24 is supported from below by the pair of main frames 12. In a top view, the front corner portion 25 of the fuel tank 24 overlaps at least a part of the ABS device 71 from above, and the ABS device 71 is located inward from the front corner portion 25 of the fuel tank 24 in the vehicle width direction. In addition, in a top view, the relay component 74 is located further outward than the position P of the main frame 12 and the front corner portion 25 of the fuel tank 24 in the vehicle width direction, but the relay component 74 is located inward from a left side surface of the left radiator 65 in the vehicle width direction, thereby suppressing an increase in the vehicle width dimension.

As described above, in the saddle-type vehicle 1 of this example, the ABS device 71 overlaps the left radiator 65, so that the ABS device 71 is shifted inward in the vehicle width direction, thereby suppressing an increase in the vehicle width dimension. By positioning the ABS device 71 above the left radiator 65, the hot air passing through the left radiator 65 is less likely to hit the ABS device 71, and the effect of heat on the ABS device 71 is kept to a minimum.

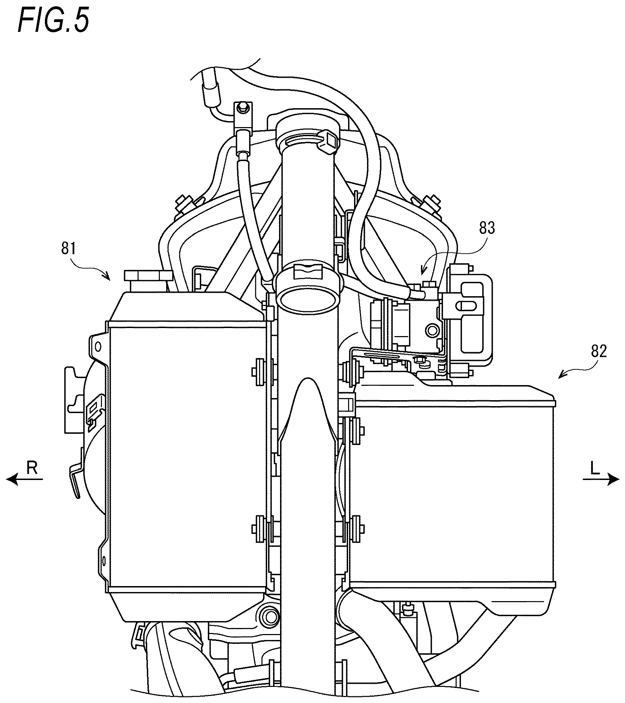

In this example, the height dimension of the left radiator is smaller than the height dimension of the right radiator, and the width dimension of the right radiator is approximately the same as the width dimension of the left radiator, but the present invention is not limited to this configuration. As illustrated in FIG. 5, the height dimension of a left radiator 82 may be smaller than the height dimension of a right radiator 81, and the width dimension of the left radiator 82 may be larger than the width dimension of the right radiator 81. By increasing the width dimension of the left radiator 82 by an amount of a reduction in the height dimension of the left radiator 82, a space for installing the ABS device 83 is secured above the left radiator 82 while suppressing a decrease in the cooling performance of the left radiator 82.

In addition, in this example, a radiator is exemplified as the heat exchanger, but the heat exchanger may be an oil cooler. The oil cooler dissipates heat from engine oil to the outside.

Further, in this example, a pair of radiators is exemplified as the heat exchanger, but the heat exchanger may be configured as a single radiator or an oil cooler.

Furthermore, in this example, an ABS device is exemplified as the hydraulic unit, but the hydraulic unit may be any unit capable of adjusting a brake fluid pressure upon receiving an operating force. For example, the hydraulic unit may be a master cylinder.

Furthermore, in this example, the ABS device is supported by the down frame and the bridge, but it is sufficient that the ABS device is supported by the vehicle body frame. For example, the ABS device may be supported by the main frame.

In addition, in this example, the relay component is installed on the outside of the ABS device in the vehicle width direction, but a component other than the relay component may be installed on the outside of the ABS device in the vehicle width direction, or a component may not be installed on the outside of the ABS device in the vehicle width direction.

Furthermore, an installation structure of the hydraulic unit of this example is not limited to the above-described off-road type saddle-type vehicle, but may be adopted in other types of saddle-type vehicles. A saddle-type vehicle is not limited to all vehicles in which a rider sits astride a seat, but also includes scooter-type vehicles in which a rider does not sit astride a seat.

As described above, a saddle-type vehicle of a first aspect includes a hydraulic unit (ABS device 71) that receives an operating force and adjusts a brake fluid pressure, a heat exchanger (left radiator 65) that dissipates heat of cooling water or engine oil to the outside, and a vehicle body frame (10) that supports the hydraulic unit and the heat exchanger, where the hydraulic unit is located above the heat exchanger, and at least a part of the hydraulic unit overlaps with the heat exchanger in a top view. According to this configuration, the hydraulic unit is overlapped on the heat exchanger, so that the hydraulic unit is shifted inward in the vehicle width direction, thereby suppressing an increase in the vehicle width dimension. In addition, by positioning the hydraulic unit above the heat exchanger, hot air passing through the heat exchanger is less likely to hit the hydraulic unit, minimizing the effect of heat on the hydraulic unit.

In a second aspect, in the first aspect, the heat exchanger is a pair of heat exchangers (right radiator 61, left radiator 65) having upper surfaces with different heights, and the hydraulic unit is located above one of the pair of heat exchangers, the one (left radiator 65) having a lower upper surface. According to this configuration, the upper surface of one of the heat exchangers is lowered below the upper surface of the other heat exchanger, thereby ensuring an installation space for the hydraulic unit above one of the heat exchangers. The hydraulic unit is installed without modifying the design of the other heat exchanger, so that changes in vehicle characteristics are reduced and the vehicle body can be designed compactly.

In a third aspect, in the first and second aspect, the vehicle body frame has a pair of main frames (12) extending rearward from a head pipe (11) while spreading out to the right and left, and the hydraulic unit and at least a part of the heat exchanger are located below the pair of main frames and inward in a vehicle width direction from a position (P) where the pair of main frames have a maximum width. According to this configuration, the hydraulic unit is located inward in the vehicle width direction, and thus the hydraulic unit is separated from an exhaust system, thereby suppressing the effect of heat from the exhaust system on the hydraulic unit. In addition, by placing the hydraulic unit close to a roll axis of the vehicle body, there is less impact on driving stability. Furthermore, space for installing other components is ensured on the outer side of the hydraulic unit in the vehicle width direction.

**In** a fourth aspect, in the third aspect, another component (relay component 74) is located outside the hydraulic unit in the vehicle width direction, and the hydraulic unit and the another component are supported by the vehicle body frame via a bracket (75). According to this configuration, the another component can be installed next to the hydraulic unit, making more effective use of the space above the heat exchanger. **In** addition, by using the same bracket for both the hydraulic unit and the another component, the number of parts is reduced, making the vehicle body lighter.

**In** a fifth aspect, in the third or fourth aspect, at least a part of the hydraulic unit overlaps one of the main frames in a top view. According to this configuration, the hydraulic unit is located inward in the vehicle width direction, and the degree to which the front side cover on the outer side of the main frame bulges outward in the vehicle width direction is reduced.

**In** a sixth aspect, in the second aspect, the vehicle body frame has a down frame (14) extending downward from a head pipe, the pair of heat exchangers are supported on both right and left sides of the down frame, and the hydraulic unit is supported by the down frame above the one of the heat exchangers. According to this configuration, one of the heat exchangers is supported at a low position on the down frame, thereby ensuring an installation space for the hydraulic unit above the heat exchanger, and the hydraulic unit is supported on the down frame in this installation space.

In a seventh aspect, in the second aspect, a height dimension of the one heat exchanger (left radiator 82) is smaller than a height dimension of the other heat exchanger (right radiator 81), and a width dimension of the one heat exchanger is larger than a width dimension of the other heat exchanger. According to this configuration, by increasing the width dimension of the one heat exchanger by an amount of reduction in the height dimension of the one heat exchangers, it is possible to ensure an installation space for the hydraulic unit above the one heat exchanger while suppressing a decrease in the cooling performance of the one heat exchanger.

Although the present example is described, other examples may be made by combining the above-described example and modification examples in whole or in part.

Furthermore, the technology of the present invention is not limited to the above-described examples, and may be modified, substituted, or changed in various ways without departing from the spirit and scope of the technical concept. Furthermore, when technological advances or derived technologies allow the technical ideas to be realized in a different way, they may be implemented using that method. Therefore, the claims cover all embodiments that may fall within the scope of the technical concept.

### REFERENCE SIGNS LIST

1: saddle-type vehicle
10: vehicle body frame
11: head pipe
12: main frame
14: down frame (vehicle body frame)
16: bridge (vehicle body frame)
61, 81: right radiator (other heat exchanger)
65, 82: left radiator (one heat exchanger)
71, 83: ABS device
74: relay component (other component)
75: bracket

## Claims

1. A saddle-type vehicle (1), comprising:
a hydraulic unit (71, 83) configured to receive an operating force and adjust a brake fluid pressure;
a heat exchanger (65, 82) configured to dissipate heat of cooling water or engine oil to the outside; and
a vehicle body frame (10) configured to support the hydraulic unit and the heat exchanger, wherein
the hydraulic unit is located above the heat exchanger, and at least a part of the hydraulic unit overlaps with the heat exchanger in a top view.

2. The saddle-type vehicle according to claim 1, wherein
the heat exchanger is a pair of heat exchangers having upper surfaces with different heights, and
the hydraulic unit is located above one of the pair of heat exchangers, the one having a lower upper surface.

3. The saddle-type vehicle according to claim 1 or 2, wherein
the vehicle body frame has a pair of main frames extending rearward from a head pipe while spreading out to the right and left, and
the hydraulic unit and at least a part of the heat exchanger are located below the pair of main frames and inward in a vehicle width direction from a position where the pair of main frames have a maximum width.

4. The saddle-type vehicle according to claim 3, wherein another component is located outside the hydraulic unit in the vehicle width direction, and the hydraulic unit and the another component are supported by the vehicle body frame via a bracket.

5. The saddle-type vehicle according to claim 3, wherein at least a part of the hydraulic unit overlaps one of the main frames in a top view.

6. The saddle-type vehicle according to claim 2, wherein
the vehicle body frame has a down frame extending downward from a head pipe,
the pair of heat exchangers are supported on both right and left sides of the down frame, and
the hydraulic unit is supported by the down frame above the one of the heat exchangers.

7. The saddle-type vehicle according to claim 2, wherein a height dimension of the one heat exchanger is smaller than a height dimension of the other heat exchanger, and a width dimension of the one heat exchanger is larger than a width dimension of the other heat exchanger.
